# FASCICULE DE BREVET EUROPEEN

(11) **EP 3 568 966 B1**
(45) Date de publication et mention de la délivrance du brevet: **23.11.2022**
(21) Numéro de dépôt: 18703059.8
(22) Date de dépôt: 16.01.2018
(51) Int. Cl.: H04L 9/32, H04L 9/40, H04N 21/4627

(54) **PROCÉDÉS ET DISPOSITIFS DE DÉLÉGATION DE DIFFUSION DE CONTENUS CHIFFRÉS**
VERFAHREN UND VORRICHTUNGEN ZUR DELEGATION DER VERTEILUNG VON VERSCHLÜSSELTEM INHALT
METHODS AND DEVICES FOR DELEGATION OF DISTRIBUTION OF ENCRYPTED CONTENT

(30) Priorité: 16.01.2017 FR 1750324
(43) Date de publication de la demande: 20.11.2019
(73) Titulaire: Orange, 92130 Issy-les-Moulineaux (FR)
(72) Inventeur: STEPHAN, Emile, 92326 Chatillon (FR); FIEAU, Frédéric, 92326 Chatillon (FR)
(86) Numéro de dépôt international: PCT/FR2018/050106
(87) Numéro de publication internationale: WO 2018/130797

(56) Documents cités:
- US-A1- 2015 106 624
- LIANG JINJIN ET AL: "When HTTPS Meets CDN: A Case of Authentication in Delegated Service", 2014 IEEE SYMPOSIUM ON SECURITY AND PRIVACY, IEEE, 18 mai 2014 (2014-05-18), pages 67-82, XP032686141, ISSN: 1081-6011, DOI: 10.1109/SP.2014.12 [extrait le 2014-11-13]
- SOLLINS K R: "Cascaded authentication", SECURITY AND PRIVACY, 1988. PROCEEDINGS., 1988 IEEE SYMPOSIUM ON OAKLAND, CA, USA 18-21 APRIL 1, WASHINGTON, DC, USA,IEEE COMPUT. SOC. PR, US, 18 avril 1988 (1988-04-18), pages 156-163, XP010012310, DOI: 10.1109/SECPRI.1988.8108 ISBN: 978-0-8186-0850-6

## Description

### 1. Domaine de l'invention

La demande d'invention se situe dans le domaine des réseaux de distribution de contenus, et plus particulièrement pour les contenus chiffrés.

### 2. Etat de la technique antérieure

Une part de plus en plus grande du trafic Internet est transportée sur le protocole TLS (Transport Layer Security, sécurité de la couche de transport, en anglais), un protocole standardisé par l'IETF dans le RFC 5346 et permettant de sécuriser les échanges entre un client et un serveur.

TLS permet d'authentifier le serveur ou le client, de chiffrer le contenu des échanges entre eux et d'en vérifier l'intégrité.

Lorsqu'un utilisateur souhaite consommer un contenu sur Internet avec son terminal client, par exemple par le biais d'une application telle qu'un navigateur ("browser" en anglais, aussi appelé "user agent"), une requête est émise à un serveur d'un fournisseur de contenu. Le plus souvent, ce fournisseur de contenu délègue la livraison du contenu à un serveur dit de "cache", choisi en fonction de plusieurs critères, comme par exemple la localisation du terminal du client et les termes du contrat entre le fournisseur de contenu et l'opérateur de l'autre serveur, lorsque ce contrat existe. La requête initiale est redirigée par le serveur du fournisseur de contenu vers le serveur de cache de façon transparente pour le terminal client. Ceci peut être fait à l'aide d'une redirection https car une telle redirection permet au serveur de cache de livrer le contenu tout en affichant le nom de domaine du fournisseur de contenu, tout en utilisant le matériel cryptographique associé à l'identité du fournisseur de contenu. Ce matériel cryptographique peut comprendre entre autre une clé publique et une clé privée.

XP032686141 (LIANG JINJIN ET AL "When HTTPS Meets CDN: A case of Authentication in Delegated Service") présente une telle délégation.

Lorsque ce serveur de cache, aussi appelé premier serveur délégué, délègue lui-même l'opération de livraison du contenu à un second serveur, dit second serveur délégué, la continuité de la sécurisation est interrompue. Le terminal client, requérant le contenu auprès du serveur du fournisseur de contenu, est directement ou indirectement redirigé vers le second serveur délégué, celui-ci ne peut pas satisfaire la requête car il ne possède pas le matériel cryptographique adéquat.

Un des buts de l'invention est de remédier à ces inconvénients de l'état de la technique.

### 3. Exposé de l'invention

L'invention améliore la situation à l'aide d'un procédé de demande de preuve de délégation pour la livraison d'un contenu à un terminal client au travers d'une connexion chiffrée, le contenu étant référencé sur un serveur dit serveur de contenu, vers lequel le terminal client a émis une requête pour obtenir le contenu, le serveur de contenu ayant délégué la livraison dudit contenu à un serveur dit serveur primaire de livraison, le procédé étant mis en œuvre par un serveur de livraison dit serveur secondaire de livraison, auquel le serveur primaire de livraison a délégué la livraison dudit contenu, et comprenant les étapes suivantes :
- réception d'une demande d'établissement d'une connexion chiffrée, en provenance du terminal client, comprenant un identifiant du serveur de contenu,
- émission d'une demande de preuve de délégation de livraison, à destination du serveur de contenu, la demande comprenant une signature du serveur primaire de livraison,
- réception d'un message en provenance du serveur de contenu, comprenant une clé de chiffrement,
- émission d'une réponse d'établissement d'une connexion chiffrée, à destination du terminal client,
- établissement de la connexion chiffrée avec le terminal client à l'aide de la clé de chiffrement.

Selon la technique antérieure, un terminal demandant un contenu à un serveur de contenu, s'il est redirigé vers un serveur secondaire de livraison n'ayant pas de relation préalable avec le serveur de contenu, la connexion pour la livraison effective du contenu ne peut pas être chiffrée de façon certifiée par le serveur de contenu.

Grâce au procédé de demande de preuve de délégation, le serveur secondaire obtient le matériel cryptographique nécessaire à l'établissement de la connexion chiffrée. La connexion est perçue par le terminal comme si elle était établie avec un serveur du même domaine que le serveur de contenu, car le chiffrement est effectué à l'aide d'une clé obtenue auprès du serveur de contenu, qui est la même que celle que le terminal a nécessairement obtenu lorsqu'il a émis sa requête initiale vers le serveur de contenu.

Selon un aspect de l'invention, le procédé de demande de preuve de délégation comprend en outre les étapes suivantes :
- obtention du contenu auprès du serveur de contenu,
- livraison du contenu au terminal client au travers de la connexion chiffrée.

Le serveur secondaire obtient le contenu auprès du serveur de contenu comme s'il était le serveur primaire, et la livraison du contenu peut se faire au travers de la connexion chiffrée par le serveur secondaire de livraison.

Selon un aspect de l'invention, le procédé de demande de preuve de délégation comprend les étapes suivantes, préalablement à l'étape de réception du message comprenant la clé de chiffrement :
- réception d'au moins une instruction relative à une capacité à livrer le contenu, en provenance du serveur de contenu,
- exécution de l'instruction.

Avantageusement, le serveur de contenu peut tester les capacités du serveur secondaire de livraison, en lui envoyant un "challenge file" comprenant des instructions spécifiques, correspondant aux "données de service". Les données de service comprennent une ou plusieurs instructions destinées à permettre la livraison du contenu.

Selon un aspect de l'invention, la demande de certification comprend une information relative aux capacités de livraison du serveur secondaire de livraison.

Grâce à cet aspect, le serveur secondaire permet au serveur de contenu de déterminer si le serveur secondaire est en mesure de livrer le contenu demandé de façon satisfaisante. Le serveur secondaire peut avoir préalablement obtenu du serveur primaire le même type d'information, ce qui lui permet d'adapter l'information aux attentes du serveur de contenu.

L'invention concerne aussi un procédé de délégation pour la livraison d'un contenu à un terminal client au travers d'une connexion chiffrée, le contenu étant référencé sur un serveur dit serveur de contenu vers lequel le terminal client a émis une requête pour obtenir le contenu, le serveur de contenu ayant délégué la livraison dudit contenu à un serveur dit serveur primaire de livraison, le serveur primaire de livraison ayant délégué la livraison dudit contenu à un serveur dit serveur secondaire de livraison, le procédé étant mis en œuvre par le serveur de contenu, et comprenant les étapes suivantes :
- réception d'une demande de preuve de délégation, en provenance du serveur secondaire de livraison, la demande comprenant une signature du serveur primaire de livraison,
- analyse de la demande,
- en fonction du résultat de l'analyse, émission d'une réponse comprenant une clé de chiffrement associée au serveur de contenu, à destination du serveur secondaire de livraison.

Grâce au procédé de délégation, si le terminal est redirigé vers un serveur secondaire de livraison n'ayant pas de relation préalable avec le serveur de contenu, la livraison du contenu peut se faire au travers d'une connexion chiffrée à l'aide de la clé obtenue, car c'est la même que le terminal a nécessairement obtenu lorsqu'il a émis sa requête initiale vers le serveur de contenu.

Selon un aspect de l'invention, l'étape d'analyse comprend les étapes suivantes :
- émission d'au moins une instruction relative à une capacité à livrer le contenu, à destination du serveur secondaire de livraison,
- vérification de l'exécution de l'instruction.

Avantageusement, le serveur de contenu profite d'une possibilité donnée par le protocole CSR, qui est de tester les capacités du serveur demandeur, en l'occurrence les capacités du serveur secondaire de livraison, en lui envoyant un "challenge file" comprenant des instructions spécifiques. De plus, ce challenge file comprend une ou des instructions destinées à tester la capacité du serveur secondaire à livrer le contenu.

Selon un aspect de l'invention, la réponse n'est pas émise si l'exécution de l'instruction n'est pas vérifiée après expiration d'une durée déterminée par le serveur de contenu.

Avantageusement, le serveur de contenu n'envoie pas la preuve de délégation demandée au serveur secondaire s'il n'est pas capable de livrer le contenu de façon satisfaisante. En conséquence, le serveur de contenu interrompt la communication avec le serveur secondaire qui ne pourra pas livrer le contenu au terminal.

Selon un aspect de l'invention, la réponse est émise avec une fausse clé si l'exécution de l'instruction n'est pas vérifiée après expiration d'une durée déterminée par le serveur de contenu, ou si le serveur secondaire de livraison n'est pas authentifié par une autorité de certification.

Si le serveur secondaire de livraison n'est pas capable d'exécuter une instruction requise pour la bonne livraison du contenu, ou s'il ne s'est pas identifié auprès du serveur de contenu à l'aide d'un certificat émanant d'une autorité reconnue, il est probable qu'il n'est pas légitime ou pas configuré pour livrer le contenu au terminal. Cependant, le serveur de contenu réagit comme si la demande du serveur secondaire de livraison était légitime. Ainsi, la connexion avec le serveur secondaire est maintenue assez longtemps, ce qui permet par exemple de localiser ce serveur à partir de son adresse IP, et d'engager une éventuelle action visant à neutraliser ou reconfigurer le serveur secondaire.

Selon un aspect de l'invention, la demande de preuve de délégation est un message de type Certificate Signing Request.

Selon la technique antérieure, une requête CSR (Certificate Signing Request, ou requête de signature de certificat, en anglais) ne peut être reçue que par un tiers de confiance largement reconnu, appelé autorité de certification, permettant d'authentifier l'identité du demandeur. Une telle autorité de certification est utilisée par exemple pour sécuriser des communications numériques via le protocole TLS.

Avantageusement, le même format de requête est utilisé entre deux serveurs, c'est-à-dire entre le serveur secondaire de livraison et le serveur de contenu. Ainsi, l'invention peut être exécutée avec un minimum de modification d'un protocole existant.

L'invention concerne encore un dispositif de demande de preuve de délégation pour la livraison d'un contenu à un terminal client au travers d'une connexion chiffrée, le contenu étant référencé sur un serveur dit serveur de contenu, vers lequel le terminal client a émis une requête pour obtenir le contenu, le serveur de contenu ayant délégué la livraison dudit contenu à un serveur dit serveur primaire de livraison, le serveur primaire de livraison ayant délégué la livraison dudit contenu à un serveur de livraison dit serveur secondaire de livraison, le dispositif comprenant une machine de calcul reprogrammable ou une machine de calcul dédiée, apte à et configurée pour :
- recevoir une demande d'établissement d'une connexion chiffrée, en provenance du terminal client, comprenant un identifiant du serveur de contenu,
- émettre une demande de preuve de délégation de livraison, à destination du serveur de contenu, la demande comprenant une signature du serveur primaire de livraison,
- recevoir un message en provenance du serveur de contenu, comprenant une clé de chiffrement,
- émettre une réponse d'établissement d'une connexion chiffrée, à destination du terminal client,
- établir la connexion chiffrée avec le terminal client à l'aide de la clé de chiffrement.

Ce dispositif de demande de preuve de délégation, apte à mettre en œuvre dans tous ses modes de réalisation le procédé de demande de preuve de délégation qui vient d'être décrit, est destiné à être mis en œuvre dans un serveur de diffusion de contenu.

L'invention concerne aussi un dispositif de délégation pour la livraison d'un contenu à un terminal client au travers d'une connexion chiffrée, le contenu étant référencé sur un serveur dit serveur de contenu vers lequel le terminal client a émis une requête pour obtenir le contenu, le serveur de contenu ayant délégué la livraison dudit contenu à un serveur dit serveur primaire de livraison, le serveur primaire de livraison ayant délégué la livraison dudit contenu à un serveur dit serveur secondaire de livraison, le dispositif comprenant une machine de calcul reprogrammable ou une machine de calcul dédiée, apte à et configurée pour :
- recevoir une demande de preuve de délégation, en provenance du serveur secondaire de livraison, la demande comprenant une signature du serveur primaire de livraison,
- analyser la demande,
- en fonction du résultat de l'analyse, émettre une réponse comprenant une clé de chiffrement associée au serveur de contenu, à destination du serveur secondaire de livraison.

Ce dispositif de de délégation, apte à mettre en œuvre dans tous ses modes de réalisation le procédé de délégation qui vient d'être décrit, est destiné à être mis en œuvre dans un serveur de référencement de contenu.

L'invention concerne aussi un système de délégation de diffusion de contenus chiffrés, comprenant un serveur de contenu, un serveur primaire de livraison, un serveur secondaire de livraison, et un terminal client, le serveur de contenu comprenant un dispositif de délégation tel que celui qui vient d'être décrit, le serveur secondaire de livraison comprenant un dispositif de demande de preuve de délégation tel que celui qui vient d'être décrit.

L'invention vise enfin un programme d'ordinateur comprenant des instructions pour la mise en œuvre des étapes du procédé de demande de preuve de délégation qui vient d'être décrit, lorsque ce programme est exécuté par un processeur, ainsi qu'un support d'informations lisible par un serveur de livraison de contenu ou un serveur de contenu, et comportant des instructions de ce programme d'ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. Le support d'informations peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations selon l'invention peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 illustre une configuration réseau situant les entités impliquées dans la technique décrite,
- la figure 2 présente un exemple d'enchainement et de mise en œuvre des étapes du procédé de demande de preuve de délégation et du procédé de délégation, selon un aspect de l'invention,
- la figure 3 présente un exemple de structure d'un dispositif de demande de preuve de délégation, selon un aspect de l'invention,
- la figure 4 présente un exemple de structure d'un dispositif de délégation, selon un aspect de l'invention.

### 5. Description détaillée d'au moins un mode de réalisation de l'invention

Dans la suite de la description, on présente des exemples de plusieurs modes de réalisation de l'invention se basant sur les protocoles TLS et https, mais l'invention peut se baser sur d'autres protocoles, tel que par exemple les protocoles HTTP1.1, SPDY, HTTP2, SCTP, DTLS, COAP et QUIC.

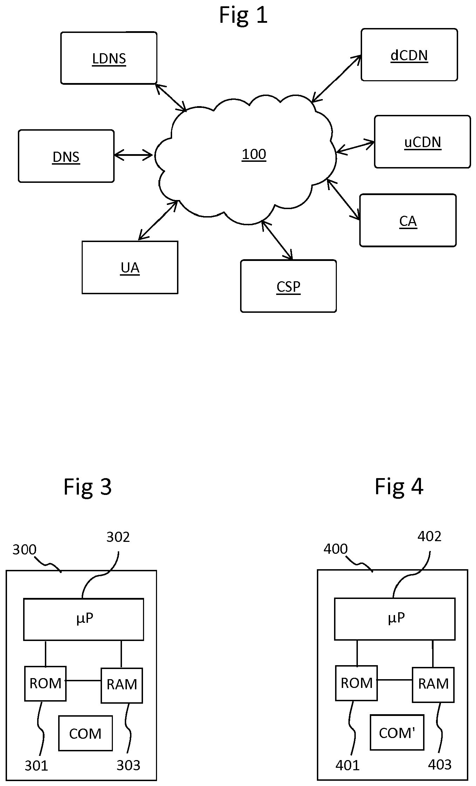

On décrit maintenant, en relation avec la **figure 1**, une configuration réseau situant les entités impliquées dans la technique décrite. Plus particulièrement, les entités suivantes sont illustrées :
- un serveur CSP d'un fournisseur de contenu référençant différents contenus (par exemple du contenu multimédia, du type comprenant des sons, des images ou des vidéos, ou des fichiers exécutables) destinés à être distribués à des terminaux clients d'utilisateurs finaux ;
- un terminal client UA, par exemple un ordinateur, un smartphone d'un utilisateur, cherchant à obtenir un contenu auprès du fournisseur de contenu, un tel terminal client UA pouvant embarquer un ou plusieurs agents clients ("User Agent" en anglais) du type http (pour "HyperText Transfer Protocol" en anglais) ou HTTPS (pour "HyperText Transfer Protocol Secure" en anglais) ou encore du type navigateur Internet ;

- un serveur de livraison de contenu uCDN auquel le serveur CSP du fournisseur de contenu a délégué la livraison du contenu en question et qui est connu du serveur CSP du fournisseur de contenu à l'aide d'un nom de domaine ;
- un secondaire de livraison de contenu dCDN auquel le primaire de livraison de contenu uCDN a potentiellement délégué la livraison du contenu recherché par l'utilisateur du terminal client UA dans un contexte de double délégation. ;
- un serveur de résolution de nom de domaine DNS permettant d'associer un nom de domaine à une adresse réseau ;
- un serveur CA d'une autorité de certification permettant de délivrer des certificats, par exemple selon le protocole HTTPS (pour « HyperText Transfer Protocol Secure » en anglais), aux serveurs en question.

Les différentes entités présentées ci-dessus sont alors connectées entre elles via un réseau 100 de télécommunications pour la transmission de données, par exemple basé sur un protocole internet.

Dans certains modes de réalisation, un serveur de résolution de nom de domaine local LDNS fait appel à un serveur DNS central.

Dans certains modes de réalisation, plusieurs serveurs CA d'autorités de certification sont utilisés, chaque serveur pouvant faire appel à un serveur CA différent.

Dans d'autres modes de réalisation, les serveurs de livraison uCDN et dCDN peuvent être regroupés dans une seule et même entité matérielle.

Dans encore d'autres modes de réalisation, davantage de serveurs de livraison sont présents, par exemple dans un contexte de délégations en cascade.

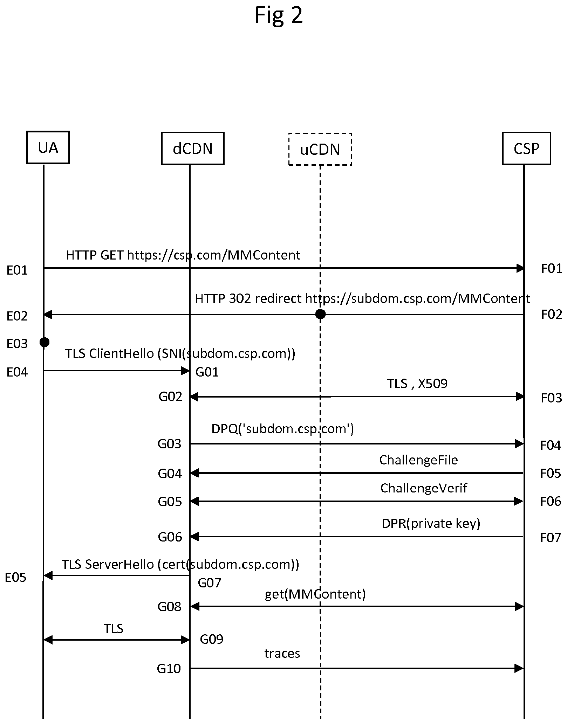

La **figure 2** présente un exemple d'enchainement et de mise en œuvre des étapes du procédé de demande de preuve de délégation et du procédé de délégation, selon un aspect de l'invention.

Un utilisateur d'un terminal UA souhaite consommer un contenu multimédia MMContent, référencé par un fournisseur de contenu, dont il connait ou a obtenu l'identité d'une façon quelconque.

Dans une phase initiale non illustrée, par exemple à l'aide d'un moteur de recherche et une recherche à partir d'un nom du contenu ou à partir du nom du fournisseur de contenu, le terminal UA obtient le nom de domaine d'un serveur CSP associé au fournisseur de contenu, sur lequel est référencé le contenu MMContent. Cette adresse est par exemple sous forme d'url (Uniform Resource Locator, ou localisateur uniforme de ressource, en anglais), telle que "csp.com".

Lors d'une étape **E01**, connue, à l'aide d'une application spécifique ou d'un navigateur générique, le terminal UA émet une requête pour obtenir le contenu MMContent. Par souci de simplicité le terme "terminal" est utilisé dans ce document, mais ce terme représente une telle application ou un tel navigateur (appelé "browser" en anglais), installée ou installé sur le terminal.

Cette requête pour obtenir le contenu est par exemple une requête http utilisant le protocole https, telle que:
"http GET https://csp.com/MMContent"

Cette requête déclenche une procédure d'établissement d'un tunnel sécurisé TLS entre le terminal UA et le serveur CSP. Cette procédure comprend l'envoi d'un message TLS ClientHello par l'UA. Le serveur CSP émet en réponse vers le terminal UA un message ServerHello comprenant du matériel cryptographique comme par exemple une clé publique à laquelle est associée une clé privée conservée par l'administrateur du domaine CSP. Ce couple de clés est en général attaché à un certificat d'un nom de domaine du serveur CSP, que le serveur CSP a obtenu après d'une autorité de certification quelconque. Ce matériel cryptographique permettra au terminal UA de déchiffrer ultérieurement du contenu chiffré par le serveur CSP ou par un autre serveur du même domaine "csp.com" ou d'un sous-domaine.

Il se peut également que lors de l'étape E01 la requête pour obtenir le contenu soit une requête http non sécurisés "GET http://csp.com/MMContent", et que la réponse du serveur CSP inclut un champ tel que celui décrit dans le RFC7838 (exemple: Alt-Svc: h2=":443"; ma=3600), proposant l'usage d'une connexion sécurisée ou encore un champ STS décrit dans le RFC6797 imposant l'usage de HTTPS pour les échanges.

Lors d'une étape **F01**, connue, le serveur CSP reçoit la requête http GET et identifie un serveur primaire de livraison uCDN, avec lequel une relation d'ordre contractuel existe et auquel le serveur de contenu CSP a délégué la livraison du contenu MMContent. Ce serveur uCDN est sélectionné par le serveur CSP selon divers critères, tels que par exemple une proximité en termes de réseau avec le terminal UA, ou un profil utilisateur du terminal UA.

Dans le contexte de l'invention, ce n'est pas le serveur uCDN qui effectue la livraison du contenu en question, mais un serveur secondaire de livraison dCDN, délégué par le serveur uCDN.

Lors d'une étape **F02**, connue, le terminal UA est redirigé vers le serveur dCDN. Plusieurs méthodes connues, basées sur des redirections obligatoires HTTP et DNS, ou sur des redirections alternatives, ou sur une combinaison des deux, ont pour résultat final que le terminal UA dispose d'une adresse IP du serveur dCDN, et d'une adresse url vers le contenu. Le message de redirection émis lors de l'étape **F02** est alors, par exemple :
"http 302 redirect https://subdom.CSP.com/MMContent",
que le terminal UA reçoit lors de l'étape **E02**.

Lors d'une étape **E03**, le terminal UA obtient l'adresse IP du serveur dCDN, par exemple par une requête DNS sur le nom de domaine "subdomsubdom.CSP.com" où "subdom.csp.com" est par exemple le nom du sous-domaine du domaine "csp.com" que le fournisseur de contenu utilise pour le contenu MMContent.

Il se peut également qu'un des serveurs impliqués dans la redirection, par exemple le serveur CSP, insère une liste de plusieurs adresses de serveur dans un message de redirection alternative émis lors de l'étape **F02**. Dans ce cas, lors de l'étape **E03**, le terminal UA obtient l'adresse IP du serveur dCDN après avoir effectué une sélection parmi les adresses de serveur comprises dans la réponse, sur des critères tels que par exemple la proximité entre le terminal UA et les serveurs de la liste, la liste étant par exemple comprise dans une réponse de type out-of-band encoding tel que décrit dans le document "https://tools.ietf.org/html/draft-reschke-http-oob-encoding-08.txt".

Dans tous les cas présentés ci-dessus, en fin d'étape **E03** le terminal UA dispose d'une url vers le domaine "'subdom.CSP.com" et de l'adresse IP d'un serveur du domaine "dCDN.com", appelé serveur dCDN.

Lorsque le terminal UA a obtenu l'adresse IP du serveur dCDN, il demande, lors d'une étape **E04**, l'établissement d'une session chiffrée entre lui-même et le serveur dCDN. Il s'agit par exemple d'un tunnel sécurisé TLS entre le terminal UA et le serveur dCDN. Cette procédure comprend l'envoi d'un message TLS ClientHello par le terminal UA. Pour ce faire, un message tel que par exemple :
"TLS ClientHello (SNI=subdom.csp.com)"
est émis par le terminal UA, et est reçu par le serveur dCDN lors d'une étape **G01.**

Le serveur dCDN détecte qu'il ne dispose pas du matériel cryptographique pour le domaine "subdom.csp.com".

Lors d'une étape **G02**, le serveur dCDN se connecte au serveur CSP via une connexion sécurisé de type TLS où les deux entités s'authentifient mutuellement par exemple en échangeant des certificats X.509.

Lors d'une étape **F03**, le serveur CSP reçoit du serveur dCDN le message émis lors de l'étape **G02**. Il est à noter que le serveur recevant ce message peut être un serveur du domaine "csp.com" différent de celui ayant reçu lors de l'étape **F01** la requête de contenu de la part du terminal UA. Par simplicité, s'ils sont distincts, ces deux serveurs qui sont du même domaine "csp.com" sont appelé "serveur CSP" tous les deux.

Lors d'une étape **G03**, le serveur dCDN émet vers le serveur CSP une demande de preuve de délégation de livraison de contenu, la demande comprenant un identifiant du serveur CSP tel que "subdom.csp.com". Selon l'invention, cette demande est adressée au serveur de contenu CSP, qui agit vis-à-vis du serveur dCDN comme s'il était une autorité de certification pour son propre domaine. La demande de preuve de délégation de livraison, nommée DelegationProofQuery dans le procédé, prend par exemple la forme d'une requête CSR (Certificate Signing Request, ou requête de signature de certificat, en anglais).

Dans la technique antérieure, une requête CSR est une demande d'un certificat adressée à une autorité de certification. Selon l'invention, une DelegationProofQuery comprend en plus la description des capacités de livraison de contenu de dCDN à l'instar de celles décrites dans RFC8008 "Content Delivery Network Interconnection (CDNI) Request Routing: Footprint and Capabilities Semantics". De plus une DelegatedCertificateQuery est signée avec la clé privée de "dcdn.com" et non avec la clé publique du certificat demandé comme dans le cas d'une requête CSR selon la technique antérieure.

Le serveur dCDN inclut dans la requête DelegationProofQuery des données préalablement reçues du serveur uCDN telles qu'une signature permettant au serveur de contenu CSP d'identifier le serveur uCDN et d'en déduire l'existence d'un lien entre les serveurs uCDN et dCDN. A cette signature peut être associée une information relative à des capacités du serveur uCDN, d'ordre technique ou concernant une couverture géographique de livraison du serveur uCDN, possiblement de façon adaptée aux capacités du serveur dCDN.

Lors d'une étape **F04**, le serveur de contenu CSP reçoit la requête DelegationProofQuery. Puis le serveur CSP prépare le matériel cryptographique pour la délégation (clés privée et publique, certificat pour le domaine "subdom.csp.com", durée de validité) ainsi que les spécifications techniques éncessaires pour la livraison du contenu dans le cadre d'une délégation au serveur dCDN, appelée "données de service". Ces données de service sont adaptées aux capacités décrites par dCDN dans la requête DelegationProofQuery. Les données de service comprennent par exemple :
- le certificat pour le domaine "subdom.csp.com", par exemple le certificat X.509 correspondant, y compris la clé de chiffrement publique (la clé privée est envoyée plus tard lors de l'étape F07),
- des instructions permettant à dCDN d'aller acquérir le contenu auprès du serveur CSP,
- des instructions pour la livraison du contenu par le serveur dCDN (format, débit, encodage des données formant le contenu, telles que décrites dans le RFC8006 "Content Delivery Network Interconnection (CDNI) Metadata"),
- des instructions pour l'enregistrement des traces de livraison (début, fin, volume, erreurs, telles que décrites dans le RFC 7937 "Content Distribution Network Interconnection (CDNI) Logging Interface").

Lors de cette étape F04, la requête comprenant une signature du serveur uCDN, le serveur de contenu CSP peut également mémoriser la requête afin de permettre une éventuelle rémunération de l'opérateur du serveur uCDN, liée à la livraison du contenu.

Lors d'une étape **F05**, le serveur de contenu CSP prépare et émet à destination du serveur dCDN un test sous la forme d'un fichier dit "fichier challenge", que le serveur qui le reçoit doit installer à un emplacement déterminé, tel que prévu par le protocole ACME (Automatic Certificate Management Environment, "draft-ietf-acme-acme-04", ou environnement de gestion automatique de certificats, en anglais) par exemple. Avantageusement selon l'invention, ce fichier de test est comprend les données de service préparées lors de l'étape F04, chiffrées à l'aide de la clé privée du certificat du domaine "subdom.csp.com".

Lors d'une étape **G04**, le serveur dCDN reçoit le fichier challenge, et l'installe lors d'une étape **G05** à l'emplacement préconisé. Il est à noter qu'à ce stade, le serveur dCDN ne peut pas déchiffrer ce fichier challenge car il ne possède pas la clé nécessaire.

Lors d'une étape **F06**, après expiration d'un délai déterminé, le serveur CSP vérifie que le fichier challenge est bien installé dans le serveur dCDN à l'emplacement préconisé, et qu'il est identique au fichier challenge envoyé lors de l'étape **F05**, tel que prévu par le protocole ACME.

Lors d'une étape **F07**, si le fichier challenge est accessible et conforme, le serveur CSP émet vers le serveur dCDN un message comprenant la clé de chiffrement privée liée au certificat du domaine "subdom.csp.com". De préférence, ce certificat est temporaire, et sa durée de validité de l'ordre de quelques heures à une journée.

Optionnellement, si l'étape de vérification **F06** échoue, ou si, dès l'étape **F03,** le serveur CSP détecte une incertitude sur l'authenticité du serveur dCDN, le serveur CSP insère une clé erronée dans message. Ceci présente l'avantage de maintenir active le plus longtemps possible la connexion entre les serveurs CSP et dCDN, et de donner plus de chances au serveur CSP de maintenir l'adresse IP du serveur dCDN active, afin de localiser un serveur éventuellement frauduleux ou mal configuré.

Lors d'une étape **G06**, le serveur dCDN reçoit le message comprenant la clé privée du certificat pour le domaine "subdom.csp.com". Le serveur déchiffre le fichier challenge comprenant les données de service, à l'aide de la clé privée.

Lors d'une étape **G07,** le serveur dCDN répond à la demande d'établissement d'une session chiffrée émise par terminal client UA lors de l'étape **E04,** avec le certificat du domaine "subdom.csp.com". Pour ce faire, un ou plusieurs messages tels que par exemple :
"TLS ServerHello (cert (subdom.scp.com))"
est émis par le serveur dCDN, et est reçu par le terminal UA lors d'une étape **E05.** La connexion TLS demandée par le terminal UA peut alors être établie, car le certificat émis par le serveur dCDN correspond à celui du domaine "subdom.csp.com", sauf si lors de l'étape F07 le serveur CSP a émis vers le serveur dCDN une clé erronée.

Lors d'une étape **G08** qui peut être exécutée avant, après ou en parallèle de l'étape **G07,** le serveur dCDN prend en compte les données de service afin d'obtenir auprès du serveur CSP le contenu à livrer.

Lors d'une étape **G09,** le serveur dCDN transmet le contenu au terminal UA. Pour le terminal client UA, tout s'est passé de façon transparente, comme si le serveur dCDN était délégué officiellement par le fournisseur du contenu pour le livrer au terminal.

Lors d'une étape **G10** optionnelle, le serveur dCDN envoie au serveur CSP l'enregistrement des traces de livraison, à des fins de comptabilité.

La **figure 3** présente un exemple de structure de dispositif de demande de preuve de délégation 300, permettant la mise en œuvre d'un procédé de demande de preuve de délégation selon l'un quelconque des modes de réalisation décrits ci-dessus en relation avec la figure 2.

Le dispositif de demande de preuve de délégation 300 comprend une mémoire vive 303 (par exemple une mémoire RAM), une unité de traitement 302, équipée par exemple d'un processeur, et pilotée par un programme d'ordinateur stocké dans une mémoire morte 301 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302.

La figure 3 illustre seulement un mode particulier de réalisation, parmi plusieurs modes particuliers de réalisation possibles, du procédé de demande de preuve de délégation détaillé ci-dessus, en relation avec la figure 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur.

Le dispositif de demande de preuve de délégation comprend également un module de communication (COM) adapté pour émettre une demande de preuve de délégation de livraison, une réponse d'établissement d'une connexion chiffrée, et pour recevoir un demande d'établissement d'une connexion chiffrée, un message comprenant une clé de chiffrement, et une instruction relative à une capacité à livrer du contenu.

Selon un mode de réalisation, un tel dispositif de demande de preuve de délégation est compris dans un serveur de diffusion de contenu, par exemple un serveur de cache apte à diffuser du contenu.

La **figure 4** présente un exemple de structure de dispositif de délégation 400, permettant la mise en œuvre d'un procédé de délégation selon l'un quelconque des modes de réalisation décrit ci-dessus en relation avec la figure 2.

Le dispositif de délégation 400 comprend une mémoire vive 403 (par exemple une mémoire RAM), une unité de traitement 402, équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

La figure 4 illustre seulement une manière particulière, parmi plusieurs possibles, de mise en œuvre le procédé de délégation détaillé ci-dessus, en relation avec la figure 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur.

Le dispositif de délégation comprend également un module de communication (COM') adapté pour recevoir une demande de preuve de délégation, et pour émettre une réponse comprenant une clé de chiffrement, et une instruction relative à une capacité à livrer le contenu.

Dans un mode de réalisation, un tel dispositif de délégation est compris dans un serveur, par exemple un serveur d'un fournisseur de contenu apte à référencer ledit contenu.

## Revendications

1. **Procédé de demande de preuve de délégation** pour la livraison d'un contenu à un terminal client (UA) au travers d'une connexion chiffrée, le contenu étant référencé sur un serveur (CSP) dit serveur de contenu, vers lequel le terminal client a émis une requête (E01) pour obtenir le contenu, le serveur de contenu ayant délégué la livraison dudit contenu à un serveur dit serveur primaire de livraison (uCDN),
le procédé étant **mis en œuvre par** un serveur de livraison dit **serveur secondaire** de livraison (dCDN), auquel le serveur primaire de livraison a délégué la livraison dudit contenu, et comprenant les étapes suivantes :
• réception (G01) d'une demande d'établissement de la connexion chiffrée, en provenance du terminal client, comprenant un identifiant du serveur de contenu,
• émission (G03) d'une demande de preuve de délégation de livraison, à destination du serveur de contenu, la demande comprenant une signature du serveur primaire de livraison,
• réception (G06) d'un message en provenance du serveur de contenu, comprenant une clé de chiffrement,
• émission (G07) d'une réponse d'établissement de la connexion chiffrée, à destination du terminal client,
• établissement (G09) de la connexion chiffrée avec le terminal client à l'aide de la clé de chiffrement.

2. **Procédé** selon la revendication précédente, comprenant en outre les étapes suivantes :
• obtention (G08) du contenu auprès du serveur de contenu,
• livraison du contenu au terminal client au travers de la connexion chiffrée.

3. **Procédé** selon l'une des revendications précédentes, comprenant les étapes suivantes, préalablement à l'étape de réception (G06) du message comprenant la clé de chiffrement :
• réception (G04) d'au moins une instruction relative à une capacité à livrer le contenu, en provenance du serveur de contenu,
• exécution (G05) de l'instruction.

4. **Procédé** selon l'une des revendications précédentes, où la demande de certification comprend une information relative aux capacités de livraison du serveur secondaire de livraison.

5. **Procédé de délégation** pour la livraison d'un contenu à un terminal client (UA) au travers d'une connexion chiffrée, le contenu étant référencé sur un serveur (CSP) dit serveur de contenu vers lequel le terminal client a émis une requête pour obtenir le contenu, le serveur de contenu ayant délégué la livraison dudit contenu à un serveur dit serveur primaire de livraison (uCDN), le serveur primaire de livraison ayant délégué la livraison dudit contenu à un serveur dit serveur secondaire de livraison (dCDN),
le procédé étant **mis en œuvre par le serveur de contenu,** et comprenant les étapes suivantes :
• réception (F04) d'une demande de preuve de délégation, en provenance du serveur secondaire de livraison, la demande comprenant une signature du serveur primaire de livraison,
• analyse (F05, F06) de la demande,
• en fonction du résultat de l'analyse, émission (F07) d'une réponse comprenant une clé de chiffrement associée au serveur de contenu, à destination du serveur secondaire de livraison.

6. **Procédé** selon la revendication 5, où l'étape d'analyse comprend les étapes suivantes :
• émission (F05) d'au moins une instruction relative à une capacité à livrer le contenu, à destination du serveur secondaire de livraison,
• vérification (F06) de l'exécution de l'instruction.

7. **Procédé** selon la revendication 6, où la réponse n'est pas émise si l'exécution de l'instruction n'est pas vérifiée après expiration d'une durée déterminée par le serveur de contenu.

8. **Procédé** selon la revendication 6, où la réponse est émise avec une fausse clé si l'exécution de l'instruction n'est pas vérifiée après expiration d'une durée déterminée par le serveur de contenu, ou si le serveur secondaire de livraison n'est pas authentifié par une autorité de certification.

9. **Procédé** selon l'une des revendications précédentes, où la demande de preuve de délégation est un message de type Certificate Signing Request.

10. **Dispositif de demande de preuve de délégation** pour la livraison d'un contenu à un terminal client (UA) au travers d'une connexion chiffrée, le contenu étant référencé sur un serveur (CSP) dit serveur de contenu, vers lequel le terminal client a émis une requête (E01) pour obtenir le contenu, le serveur de contenu ayant délégué la livraison dudit contenu à un serveur dit serveur primaire de livraison (uCDN), le serveur primaire de livraison ayant délégué la livraison dudit contenu à un serveur de livraison dit **serveur secondaire** de livraison (dCDN), le dispositif comprenant une machine de calcul reprogrammable (302) ou une machine de calcul dédiée, apte à et configurée pour :
• recevoir une demande d'établissement de la connexion chiffrée, en provenance du terminal client, comprenant un identifiant du serveur de contenu,
• émettre une demande de preuve de délégation de livraison, à destination du serveur de contenu, la demande comprenant une signature du serveur primaire de livraison,
• recevoir un message en provenance du serveur de contenu, comprenant une clé de chiffrement,
• émettre une réponse d'établissement de la connexion chiffrée, à destination du terminal client,
• établir la connexion chiffrée avec le terminal client à l'aide de la clé de chiffrement.

11. **Dispositif de délégation** pour la livraison d'un contenu à un terminal client (UA) au travers d'une connexion chiffrée, le contenu étant référencé sur un serveur (CSP) dit serveur de contenu vers lequel le terminal client a émis une requête pour obtenir le contenu, le serveur de contenu ayant délégué la livraison dudit contenu à un serveur dit serveur primaire de livraison (uCDN), le serveur primaire de livraison ayant délégué la livraison dudit contenu à un serveur dit serveur secondaire de livraison (dCDN), le dispositif comprenant une machine de calcul reprogrammable (402) ou une machine de calcul dédiée, apte à et configurée pour :
• recevoir une demande de preuve de délégation, en provenance du serveur secondaire de livraison, la demande comprenant une signature du serveur primaire de livraison,
• analyser la demande,
• en fonction du résultat de l'analyse, émettre une réponse comprenant une clé de chiffrement associée au serveur de contenu, à destination du serveur secondaire de livraison.

12. **Système de délégation** comprenant un serveur de contenu (CSP), un serveur secondaire de livraison(dCDN), et un terminal client (UA), le serveur de contenu comprenant un dispositif de délégation conforme à la revendication 11, le serveur secondaire de livraison comprenant un dispositif de demande de preuve de délégation conforme à la revendication 10.

13. **Produit programme** d'ordinateur, comprenant des instructions de code de programme pour la mise en œuvre de toutes les étapes du procédé selon l'une quelconque des revendications 1 à 9, lorsque ledit programme est exécuté sur un ordinateur.

14. **Support d'enregistrement** lisible par un serveur de livraison de contenu (dCDN) ou un serveur de contenu (CSP) sur lequel est enregistré le programme selon la revendication 13.

## Patentansprüche

1. Delegierungsnachweis-Anfrageverfahren für die Lieferung eines Inhalts an ein Client-Endgerät (UA) über eine verschlüsselte Verbindung, wobei der Inhalt auf einem Inhaltsserver genannten Server (CSP) referenziert ist, an den das Client-Endgerät eine Anforderung (E01) gesendet hat, um den Inhalt zu erhalten, wobei der Inhaltsserver die Lieferung des Inhalts an einen Primär-Lieferserver (uCDN) genannten Server delegiert hat, wobei das Verfahren von einem Sekundär-Lieferserver (dCDN) genannten Lieferserver durchgeführt wird, an den der Primär-Lieferserver die Lieferung des Inhalts delegiert hat, und die folgenden Schritte enthält:
• Empfang (G01) einer Erstellungsanfrage der verschlüsselten Verbindung vom Client-Endgerät, die eine Kennung des Inhaltsservers enthält,
• Senden (G03) einer Lieferdelegierungsnachweis-Anfrage an den Inhaltsserver, wobei die Anfrage eine Signatur des Primär-Lieferservers enthält,
• Empfang (G06) einer Nachricht vom Inhaltsserver, die einen Verschlüsselungsschlüssel enthält,
• Senden (G07) einer Erstellungsantwort der verschlüsselten Verbindung an das Client-Endgerät,
• Erstellung (G09) der verschlüsselten Verbindung mit dem Client-Endgerät mit Hilfe des Verschlüsselungsschlüssels.

2. Verfahren nach dem vorhergehenden Anspruch, das außerdem die folgenden Schritte enthält:
• Erhalt (G08) des Inhalts beim Inhaltsserver,
• Lieferung des Inhalts an das Client-Endgerät über die verschlüsselte Verbindung.

3. Verfahren nach einem der vorhergehenden Ansprüche, das die folgenden Schritte vor dem Schritt des Empfangs (G06) der den Verschlüsselungsschlüssel enthaltenden Nachricht enthält:
• Empfang (G04) mindestens einer Anweisung bezüglich einer Kapazität, den Inhalt zu liefern, vom Inhaltsserver,
• Ausführung (G05) der Anweisung.

4. Verfahren nach einem der vorhergehenden Ansprüche, wobei die Zertifizierungsanfrage eine Information bezüglich der Lieferkapazitäten des Sekundär-Lieferservers enthält.

5. Delegierungsverfahren für die Lieferung eines Inhalts an ein Client-Endgerät (UA) über eine verschlüsselte Verbindung, wobei der Inhalt auf einem Inhaltsserver genannten Server (CSP) referenziert ist, an den das Client-Endgerät eine Anforderung gesendet hat, um den Inhalt zu erhalten, wobei der Inhaltsserver die Lieferung des Inhalts an einen Primär-Lieferserver (uCDN) genannten Server delegiert hat, wobei der Primär-Lieferserver die Lieferung des Inhalts an einen Sekundär-Lieferserver (dCDN) genannten Server delegiert hat, wobei das Verfahren vom Inhaltsserver durchgeführt wird und die folgenden Schritte enthält:
• Empfang (F04) einer Delegierungsnachweis-Anfrage vom Sekundär-Lieferserver, wobei die Anfrage eine Signatur des Primär-Lieferservers enthält,
• Analyse (F05, F06) der Anfrage,
• abhängig vom Ergebnis der Analyse, Senden (F07) einer einen dem Inhaltsserver zugeordneten Verschlüsselungsschlüssel enthaltenden Antwort an den Sekundär-Lieferserver.

6. Verfahren nach Anspruch 5, wobei der Analyseschritt die folgenden Schritte enthält:
• Senden (F05) mindestens einer Anweisung bezüglich einer Kapazität, den Inhalt zu liefern, an den Sekundär-Lieferserver,
• Verifizierung (F06) der Ausführung der Anweisung.

7. Verfahren nach Anspruch 6, wobei die Antwort nicht gesendet wird, wenn die Ausführung der Anweisung nicht nach Ablauf einer vom Inhaltsserver bestimmten Dauer verifiziert ist.

8. Verfahren nach Anspruch 6, wobei die Antwort mit einem falschen Schlüssel gesendet wird, wenn die Ausführung der Anweisung nicht nach Ablauf einer vom Inhaltsserver bestimmten Dauer verifiziert ist, oder wenn der Sekundär-Lieferserver nicht von einer Zertifizierungsbehörde authentifiziert wird.

9. Verfahren nach einem der vorhergehenden Ansprüche, wobei die Delegierungsnachweis-Anfrage eine Nachricht des Typs Certificate Signing Request ist.

10. Delegierungsnachweis-Anfragevorrrichtung für die Lieferung eines Inhalts an ein Client-Endgerät (UA) über eine verschlüsselte Verbindung, wobei der Inhalt auf einem Inhaltsserver genannten Server (CSP) referenziert ist, an den das Client-Endgerät eine Anforderung (E01) gesendet hat, um den Inhalt zu erhalten, wobei der Inhaltsserver die Lieferung des Inhalts an einen Primär-Lieferserver (uCDN) genannten Server delegiert hat, wobei der Primär-Lieferserver die Lieferung des Inhalts an einen Sekundär-Lieferserver (dCDN) genannten Lieferserver delegiert hat, wobei die Vorrichtung eine neu programmierbare Rechenmaschine (302) oder eine dedizierte Rechenmaschine enthält, die geeignet und konfiguriert ist:
• eine Erstellungsanfrage der verschlüsselten Verbindung vom Client-Endgerät zu empfangen, die eine Kennung des Inhaltsservers enthält,
• eine Lieferdelegierungsnachweis-Anfrage an den Inhaltsserver zu senden, wobei die Anfrage eine Signatur des Primär-Lieferservers enthält,
• eine Nachricht vom Inhaltsserver zu empfangen, die einen Verschlüsselungsschlüssel enthält,
• eine Erstellungsantwort der verschlüsselten Verbindung an das Client-Endgerät zu senden,
• die verschlüsselte Verbindung mit dem Client-Endgerät mit Hilfe des Verschlüsselungsschlüssels aufzubauen.

11. Delegierungsvorrichtung für die Lieferung eines Inhalts an ein Client-Endgerät (UA) über eine verschlüsselte Verbindung, wobei der Inhalt auf einem Inhaltsserver genannten Server (CSP) referenziert ist, an den das Client-Endgerät eine Anforderung zum Erhalt des Inhalts gesendet hat, wobei der Inhaltsserver die Lieferung des Inhalts an einen Primär-Lieferserver (uCDN) genannten Server delegiert hat, wobei der Primär-Lieferserver die Lieferung des Inhalts an einen Sekundär-Lieferserver (dCDN) genannten Server delegiert hat, wobei die Vorrichtung eine neu programmierbare Rechenmaschine (402) oder eine dedizierte Rechenmaschine enthält, die geeignet und konfiguriert ist:
• eine Delegierungsnachweis-Anfrage vom Sekundär-Lieferserver zu empfangen, wobei die Anfrage eine Signatur des Primär-Lieferservers enthält,
• die Anfrage zu analysieren,
• abhängig vom Ergebnis der Analyse, eine einen dem Inhaltsserver zugeordneten Verschlüsselungsschlüssel enthaltende Antwort an den Sekundär-Lieferserver zu senden.

12. Delegierungssystem, das einen Inhaltsserver (CSP), einen Sekundär-Lieferserver (dCDN) und ein Client-Endgerät (UA) enthält, wobei der Inhaltsserver eine Delegierungsvorrichtung nach Anspruch 11 enthält, wobei der Sekundär-Lieferserver eine Delegierungsnachweis-Anfragevorrichtung nach Anspruch 10 enthält.

13. Computerprogrammprodukt, das Programmcodeanweisungen für die Durchführung aller Schritte des Verfahrens nach einem der Ansprüche 1 bis 9 enthält, wenn das Verfahren auf einem Computer ausgeführt wird.

14. Speicherträger, der von einem Inhaltslieferserver (dCDN) oder einem Inhaltsserver (CSP) lesbar ist, auf dem das Programm nach Anspruch 13 gespeichert ist.

## Claims

1. **Method for requesting proof of delegation** for the delivery of a content to a client terminal (UA) through an encrypted connection, the content being referenced on a server (CSP) termed the content server, to which the client terminal has sent a query (E01) to obtain the content, the content server having delegated the delivery of said content to a server termed the primary delivery server (uCDN),
the method being **implemented by** a delivery server termed the **secondary** delivery **server** (dCDN), to which the primary delivery server has delegated the delivery of said content, and comprising the following steps:
• receiving (G01) a request in respect of establishment of the encrypted connection, originating from the client terminal, comprising an identifier of the content server,
• sending (G03) to the content server a request for proof of delegation of delivery, the request comprising a signature of the primary delivery server,
• receiving (G06) a message originating from the content server, comprising an encryption key,
• sending (G07) to the client terminal a response in respect of establishment of the encrypted connection,
• establishing (G09) the encrypted connection with the client terminal with the aid of the encryption key.

2. **Method** according to the preceding claim, further comprising the following steps:
• obtaining (G08) the content from the content server,
• delivering the content to the client terminal through the encrypted connection.

3. **Method** according to one of the preceding claims, comprising the following steps, prior to the step (G06) of receiving the message comprising the encryption key:
• receiving (G04) at least one instruction relating to a capability to deliver the content, originating from the content server,
• executing (G05) the instruction.

4. **Method** according to one of the preceding claims, where the certification request comprises an item of information relating to the delivery capabilities of the secondary delivery server.

5. **Method of delegation** for the delivery of a content to a client terminal (UA) through an encrypted connection, the content being referenced on a server (CSP) termed the content server to which the client terminal has sent a query to obtain the content, the content server having delegated the delivery of said content to a server termed the primary delivery server (uCDN), the primary delivery server having delegated the delivery of said content to a server termed the secondary delivery server (dCDN),
the method being **implemented by the content server,** and comprising the following steps:
• receiving (F04) a request for proof of delegation, originating from the secondary delivery server, the request comprising a signature of the primary delivery server,
• analysing (F05, F06) the request,
• based on the result of the analysis, sending (F07) to the secondary delivery server a response comprising an encryption key associated with the content server.

6. **Method** according to Claim 5, where the analysis step comprises the following steps:
• sending (F05) to the secondary delivery server at least one instruction relating to a capability to deliver the content,
• verifying (F06) the execution of the instruction.

7. **Method** according to Claim 6, where the response is not sent if the execution of the instruction is not verified after expiry of a duration determined by the content server.

8. **Method** according to Claim 6, where the response is sent with a false key if the execution of the instruction is not verified after expiry of a duration determined by the content server, or if the secondary delivery server is not authenticated by a certifying authority.

9. **Method** according to one of the preceding claims, where the request for proof of delegation is a message of Certificate Signing Request type.

10. **Device for requesting proof of delegation** for the delivery of a content to a client terminal (UA) through an encrypted connection, the content being referenced on a server (CSP) termed the content server, to which the client terminal has sent a query (E01) to obtain the content, the content server having delegated the delivery of said content to a server termed the primary delivery server (uCDN), the primary delivery server having delegated the delivery of said content to a delivery server termed the **secondary** delivery **server** (dCDN), the device comprising a reprogrammable computing machine (302) or a dedicated computing machine, able to and configured to:
• receive a request in respect of establishment of the encrypted connection, originating from the client terminal, comprising an identifier of the content server,
• send a request for proof of delegation of delivery to the content server, the request comprising a signature of the primary delivery server,
• receive a message originating from the content server, comprising an encryption key,
• send a response in respect of establishment of the encrypted connection to the client terminal,
• establish the encrypted connection with the client terminal with the aid of the encryption key.

11. **Device for delegation** for the delivery of a content to a client terminal (UA) through an encrypted connection, the content being referenced on a server (CSP) termed the content server to which the client terminal has sent a query to obtain the content, the content server having delegated the delivery of said content to a server termed the primary delivery server (uCDN), the primary delivery server having delegated the delivery of said content to a server termed the secondary delivery server (dCDN), the device comprising a reprogrammable computing machine (402) or a dedicated computing machine, able to and configured to:
• receive a request for proof of delegation, originating from the secondary delivery server, the request comprising a signature of the primary delivery server,
• analyse the request,
• based on the result of the analysis, send a response comprising an encryption key associated with the content server to the secondary delivery server.

12. **Delegation system** comprising a content server (CSP), a secondary delivery server (dCDN), and a client terminal (UA), the content server comprising a delegation device according to Claim 11, the secondary delivery server comprising a device for requesting proof of delegation according to Claim 10.

13. Computer **program product,** comprising program code instructions for the implementation of all the steps of the method according to any one of Claims 1 to 9, when said program is executed on a computer.

14. **Recording medium** readable by a content delivery server (dCDN) or a content server (CSP) on which the program according to Claim 13 is recorded.
